Europäisches Patentamt

European Patent Office

Office européen des brevets

(19)

(11) Publication number: **0 224 945**
**A1**

(12) # EUROPEAN PATENT APPLICATION

(21) Application number: **86201784.5**

(22) Date of filing: **14.10.86**

(51) Int. Cl.⁴ **C08L 75/04** , **C08J 9/14** ,
//(C08L75/04,27:18)

(30) Priority: **31.10.85 GB 8526813**

(43) Date of publication of application:
**10.06.87 Bulletin 87/24**

(84) Designated Contracting States:
**AT BE CH DE FR GB LI NL SE**

(71) Applicant: **SHELL INTERNATIONALE
RESEARCH MAATSCHAPPIJ B.V.
Carel van Bylandtlaan 30
NL-2596 HR Den Haag(NL)**

(72) Inventor: **Klausen, Kim Harnov
c/o P.O. Box 106
DK-7000 Fredericia(DK)**

(74) Representative: **Aalbers, Onno et al
P.O. Box 302
NL-2501 CH The Hague(NL)**

(54) **Process for the preparation of a heat-stable polyurethane foam.**

(57) Process for the preparation of heat-stable, non-silicate polyurethane foams by reacting a polyol with an organic compound having more than one isocyanate group in the presence of polytetrafluoroethylene particles and a blowing agent.

The resulting foams may be used for insulating industrial steam pipes or pipes for district heating systems.

EP 0 224 945 A1

## PROCESS FOR THE PREPARATION OF A HEAT-STABLE POLYURETHANE FOAM

The invention relates to a process for the preparation of a heat-stable polyurethane foam by reacting at least one polyol with an organic compound having more than one isocyanate group per molecule.

Polyurethane foams are eminently suitable for use as insulating materials in many applications. The performance of insulating materials is generally indicated by their K-value, which is defined as the number of calories which passes in one second through a cube of 1 cm³ of said material, from one face to the opposite face, when the temperature of said faces differs 1 °C. Hence, materials having good insulation properties are characterized by a low K-value. As most insulating materials may be expected to be used for a considerable length of time, it is equally important that the K-factor should not change (increase) with time.

In British Patent Specification 1,025,914 it has been disclosed that the K-value of polyurethane foam-based insulating materials could be kept relatively constant by the incorporation of a relatively small amount of a halo-substituted polymer of an ethylenically unsaturated hydrocarbon, a preference being expressed for polyvinylidenechloride interpolymers. The maximum amount of such polymers used in the examples of said patent specification was approximately 21 parts by weight (pbw) per 100 pbw of polyol. The initial K-value of such a foam, formed in a closed mould, was 0.100 and increased to 0.131 after 56 days aging at 43.3 °C (110 °F) and 75 per cent relative humidity, while exposure to dry heat of 93.3 °C (200 °F) during 48 hours resulted in a very slight volume expansion of approximately 4 per cent.

The good performance of a foam under the above-mentioned relatively mild conditions is no safe guard for the performance of said foam under much more stringent conditions, such as may be the case with polyurethane foams used for insulating pipes for district heating systems or for industrial steam pipes, where the foams may be exposed to temperatures in the range of from 130 to 160 °C. Under these conditions the foams should still maintain their insulating properties but moreover they should also be dimensionably stable and not disintegrate, a deficiency which seldom occurs under considerably milder service conditions.

Surprisingly it has now been found that when polytetrafluoroethylene (PTFE) is coformulated with the other components of a polyurethane foam composition, the ultimate foam can withstand elevated temperatures for relatively long periods of time.

Accordingly, the invention provides a process for the preparation of a heat-stable polyurethane foam by reacting at least one polyol with an organic compound having more than one isocyanate group per molecule, characterized in that said reaction is carried out in the presence of polytetrafluoroethylene particles and a blowing agent.

In the production of the heat-stable polyurethane foams prepared according to the present invention the same compounds may be used as in the production of conventional polyurethane foams, such as polyols, polyisocyanates, blowing agents, catalysts, foam stabilizers etc.

Although virtually any type of polyhydroxyl compound may be employed as the polyol component, a preference is expressed for the polyether type of polyols. These latter polyols are generally obtained by reacting a low molecular weight polyhydric compound with one or more molecules of an alkylene oxide per hydric site of the polyhydric compound, which reaction may be carried out in the presence of a catalyst. Suitable such polyhydric compounds include sucrose, sorbitol and glycerol, while suitable such alkylene oxide compounds include ethylene oxide, propylene oxide, butylene oxide. This approach enables polyols to be made with a wide variation in hydroxyl functionality, chain length and molecular weight, which affords a great deal of flexibility in selecting polyols or polyol blends to provide the ultimate foam with the required balance of properties, such as high temperature resistance. For applications where this property is important it may be advantageous to employ a formulation which includes short chain polyols such as low molecular weight glycerol-propylene oxide adducts, or even low molecular weight polyhydric compounds which have not been modified with an alkylene oxide, e.g. glycerol.

The isocyanate-containing compounds which may be used in the process according to the invention include the various isomers and derivatives of toluene diisocyanate (TDI) such as the 2,4-and 2,6-isomers of toluene diisocyanate or mixtures thereof, and 4,4'-diphenylmethane diisocyanate (MDI). Crude grades of isocyanates, both TDI and MDI, may also be employed according to the present invention. In the practice of the present invention a preference is expressed for MDI.

Generally an excess of polyisocyanate over polyhydroxyl-containing compound will be used, which excess -also referred to as "isocyanate index" -is defined as the number of isocyanate equivalents divided by the number of hydroxyl equivalents multiplied by 100%.

The reaction between the hydroxyl groups and the isocyanate groups may be conveniently catalysed by compounds which include tertiary amines such as, triethylamine, triethylenediamine, dimethylaminocyclohexane, pentamethyldiethylenetriamine, and/or organic tin compounds such stannous octoate, stannous stearate and dibutyltindilaurate.

Trichlorofluoromethane, a widely used blowing agent in the preparation of polyurethane foams, may conveniently be used in the process according to the present invention and is commercially available under the trade name FREON 11. The presence of water, which is frequently included in the foam formulation to increase the hardness of the ultimate foam, will also contribute towards the foaming, as carbon dioxide is produced as a result of the isocyanate-water reaction.

The foam-forming composition may further include auxiliary additives such as silicon oils, which may be employed as foam stabilizers and halide-or phosphorous-containing compounds which act as flame retardants. PTFE, which is included in the foam-forming composition prepared according to the present invention to enhance the high temperature performance of the ultimate foam is preferably dispersed in the polyol or polyol mixture, which mixture may also contain some or all of the remaining components except for the polyisocyanate. To this end the PTFE should be present as dispersible particles. The actual shape or size of the PTFE particles is not very critical provided the presence of these particles does not result in blocking of the equipment or instability of the resulting dispersion. Hence it is preferred that the average particle size of the PTFE is not higher than 25 $\mu$m. In some instances it may be advantageous to employ scrap or waste PTFE.

The amount of PTFE which may conveniently be employed in the compositions used according to the present invention will to a large degree be determined by the temperature at which the ultimate foam will be employed and also if the foam is covered by an outer skin or used as such. It will be understood by those skilled in the art that the latter conditions will be more severe and may require a foam with a higher PTFE content. On the other hand the amount of PTFE should not be too high so as to interfere with actual foam formation. Hence it is preferred that the foam should contain from 25 to 60 pbw of PTFE per 100 pbw of polyol in the formulation. More preferably the formulation should contain from 35 to 50 pbw of PTFE per 100 pbw of polyol.

The invention will be further understood from the following example wherein the amounts of the individual components are expressed as parts by weight.

EXAMPLE

Polyurethane based insulating jacket halves were prepared employing the following formulation:     parts by weight

| | |
|---|---|
| CARADOL MD 918 (polyol ex SHELL) ("CARADOL" is a trade mark) | 75 |
| CARADOL 555-1 (polyol ex SHELL) | 13 |
| Glycerol | 10 |
| Silicon oil Tegostab B 8404 (ex Goldschmidt) | 1.7 |
| N,N-dimethylcyclohexylamine | 4 |
| Pentamethyldiethylenetriamine | 0.02 |
| REOFLAM 306 (a phosphorous containing composite ex Ciba Geigy) ("REOFLAME" is a trade mark) | 30 |
| water | 1.4 |
| FREON 11 (Trichlorofluoromethane) ("FREON" is a trade mark) | 45 |
| FLUON L169 (PTFE powder ex ICI) ("FLUON" is a trade mark) | 43 |
| CARADATE 30 (MDI ex SHELL) ("CARADATE" is a trade mark) | 243.1 |

In order to arrive at the foam-forming composition the polyols and REOFLAME were blended and subsequently the PTFE powder was dispersed in the obtained blend employing a laboratory mixer. Next water and silicon oil were mixed into the dispersion followed by the amines and finally the blowing agent - (FREON 11) was added.

When this dispersion was mixed with the appropriate amount of the polyisocyanate, the resulting foam-forming composition was found to have the following properties

cream time 22 s
fibre time 71 s
tack free time 150 s
free rise density 45 g/l.

The PTFE-based foam-forming composition was further tested in the form of insulating jackets for industrial valves, as produced by TOPO/CAP UNIT A/S. Denmark, employing jacket type H 40, having the following dimensions:

internal length 250 mm external length 335 mm
internal diameter 150 mm external diameter 230 mm.

To this end approximately 438 g of the hereinbefore mentioned foam-forming composition was sprayed into an open epoxy mould employing a low pressure spray gun -output 15 kg/min -equipped with two feeding lines, one for the polyisocyanate-free PTFE dispersion and the other for the polyisocyanate. Subsequently the mould was closed before foam formation started. The resulting pipe scale halves weighed 430 g and had a density of 55 g/l. Similar jacket halves were made employing the above foam-forming formulation wherein the PTFE had been omitted.

The insulating jackets were tested for their high temperature performance by placing two jacket halves in a set-up consisting of 40 mm isolated, horizontal steel pipe provided with a dummy valve of steel which could be heated by circulating hot oil of constant temperature through said pipe and valve. The insulating jackets were tested at 160 and 180 °C for 33 days. Apart from a visual assessment of the exposed jacket halves, the influence of the high temperature exposure on the dimensional stability and the insulating power of said insulating jackets was also established by comparing these aspects with those of the corresponding non-exposed insulating jackets. The results have been collected in the Table.

These data show that the incorporation of 43 parts by weight of PTFE per 100 parts by weight of polyol does indeed raise the high temperature performance of the ultimate polyurethane-based insulating jackets.

0 224 945

TABLE

| Jacket | PTFE-containing foam | | PTFE-free foam | |
|---|---|---|---|---|
| Exposure conditions | 33 days at 160 °C | 33 days at 180 °C | 33 days at 160 °C | 33 days at 180 °C |
| Visual assessment | Inner surface of jacket slightly charred. Colour: light-darkbrown No deformation. | Inner surface jacket charred. Colour: brown-very dark brown. No deformation. | Inner surface of jacket charred. Colour: dark-brown-black. Local deformations. | Inner surface of jacket very severely charred. Colour: almost black Local deformations. |

Average shrinkage

By comparing the cross-measurements of exposed and non-exposed jacket shells.

| % | 0.99 | 0.94 | 1.17 | 1.46 |
|---|---|---|---|---|

| Insulating power | Internal temp. | Δt | Δt | – | – |
|---|---|---|---|---|---|

By comparing surface temperature of nonexposed and exposed jackets at different internal temperatures after conditioning for at least 2 h.

| | Internal temp. | Δt | Δt |
|---|---|---|---|
| | 100 | 2.0 | 0.3 |
| | 120 | 2.6 | 0.8 |
| | 140 | 3.2 | 1.5 |
| | 160 | 3.5 | 2.6 |

## Claims

1. A process for the preparation of a heat-stable polyurethane foam by reacting at least one polyol with an organic compound having more than one isocyanate group per molecule, characterised in that said reaction is carried out in the presence of polytetrafluoroethylene particles and a blowing agent.

2. A process according to claim 1, wherein polytetrafluoroethylene is present as dispersible particles.

3. A process according to claim 1 or 2, wherein the polytetrafluoroethylene is employed in the range of from 25 to 60 parts by weight per 100 parts by weight of polyol.

4. A process according to any one of the preceding claims, wherein the polytetrafluoroethylene is employed in the range of from 35 to 50 parts by weight per 100 parts by weight of polyol.

5. A process according to any one of the preceding claims, wherein the organic compound having more than one isocyanate group is a toluene diisocyanate or a 4,4'-diphenylmethane diisocyanate.

6. A process according to any one of the preceding claims, wherein the organic compound having more than one isocyanate group is 4,4'-diphenylmethane diisocyanate.

7. A process for the preparation of a heat-stable polyurethane foam, substantially as hereinbefore described with reference to the Example.

8. A heat-stable polyurethane foam whenever prepared by a process as claimed in any one of the preceding claims.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 753 933 (F. OLSTOWSKI et al.)<br>* Claims 1,2,7,11,12; column 2, line 41 - column 3, line 15; example 25; column 13, lines 18-20 * | 1-3,5-8 | C 08 L 75/04<br>C 08 J 9/14<br>(C 08 L 75/04<br>C 08 L 27:18 ) |
| Y | | 1-8 | |
| D,Y | GB-A-1 025 914 (PITTSBURGH PLATE GLASS CO.)<br>* Claims; page 3, lines 39-47; example II * | 1-8 | |
| | --- | | |

TECHNICAL FIELDS SEARCHED (Int. Cl.4)

C 08 J

The present search report has been drawn up for all claims

| Place of search | Date of completion of the search | Examiner |
|---|---|---|
| THE HAGUE | 16-03-1987 | HALLEMEESCH A.D. |